# EUROPEAN PATENT SPECIFICATION

(11) **EP 0 394 929 B1**
(45) Date of publication and mention of the grant of the patent: **20.09.1995**
(21) Application number: 90107677.8
(22) Date of filing: 23.04.1990
(51) Int. Cl.: H04N 1/40

(54) **Dither image processing method**
Zitter-Bildverarbeitungsmethode
Méthode de traitement d'image par tremblement

(30) Priority: 24.04.1989 JP 103695/89; 09.06.1989 JP 147229/89; 20.06.1989 JP 157164/89
(43) Date of publication of application: 31.10.1990
(73) Proprietor: YOZAN INC., Tokyo 155 (JP); SHARP KABUSHIKI KAISHA, Osaka 545 (JP)
(72) Inventor: Kumagai, Ryohei, Tokyo 112 (JP)
(74) Representative: Grünecker, Kinkeldey, Stockmair & Schwanhäusser Anwaltssozietät

(56) References cited:
- EP-A- 0 272 147
- US-A- 4 698 778
- PATENT ABSTRACTS OF JAPAN,vol. 9, no. 15 (E-291)(1738) 22 January 1985;& JP-A-59 163959
- DISSERTATION BEI DER TECHNISCHEN UNIVERSITÄT MÜNCHEN,28 June 1984, München, pages 1-84; K.KOCH: "Untersuchung der Wahrnehmbarkeit von Rasterungen bei digitaler Wiedergabe von Halbtonbildern"
- IEEE TRANSACTIONS ON COMMUNICATIONS, vol. 29, no. 12, December 1981, New York,US;pages 1898 - 1925; STOFFEL et al.: "A survey of electric techniques for pictorial image reproduction"

## Description

The present invention relates to a dither processing method.

The outline of conventional methods for binarizing is shown in Table 1.

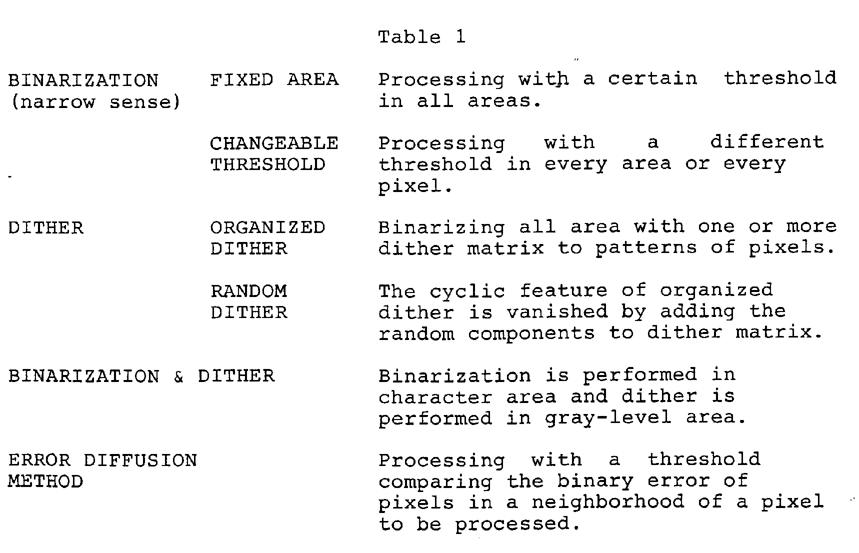

Though the purpose of binarizing image is generally to reduce the quantity of information, a part of characteristics is lost as a matter of course because of the decrease of information. For example, when character and configuration of an original image is to be shown clearly, main characteristics are preserved by performing binarization (narrow sense) which can divide the original image into figures and background. On the other hand, when an original image is to be expressed with gray-levels, such as solid natural image, it is to be expressed by pseudo-multi-levels through dither. If binarization in narrow sense is performed in this case, the characteristics of gray-level in the original image is lost. Actually, there are many cased that an image including both of character and photograph is processed in the field of printing, facsimile and so on. Therefore, it is impossible to reproduct the characteristics of whole image by a method for expressing binarization only for image or character. To solve this problem, a method is suggested that binarization in narrow sense is performed in character area and dither is performed in configuration area after dividing an image into character area (the area to be performed binarization in narrow sense) and configuration area (the area to be expressed by pseudo-multi-levels). Performing such compound processing, the boundary between two areas becomes discontinuous; consequently the result expressed by binarization becomes extremely unnatural image.

Generally, the image to be processed is binarized through the following steps:
i) Defining the threshold of each pixel in a square dither cell of nxn pixels,
ii) Applying the dither cell to the image to be processed.

Here, using dither of dispersive type (such as Bayer type), bigger dither cell is to be used for deepening the grade of depth. Consequently the image becomes dim and the cycle which is the characteristics of dither becomes standing out because black pixels do not concentrate on edge and others. On the other hand, mesh dot type and spiral type dither have the following characteristics. It is possible to represent approximate mean densities more naturally, but it becomes rough-dot image when the depth is deepened.

There is another method for binarization of error diffusing method: it is possible to express an image by pseudo-multi-levels without limitation of the number of the levels of density. Error diffusing method is described below.

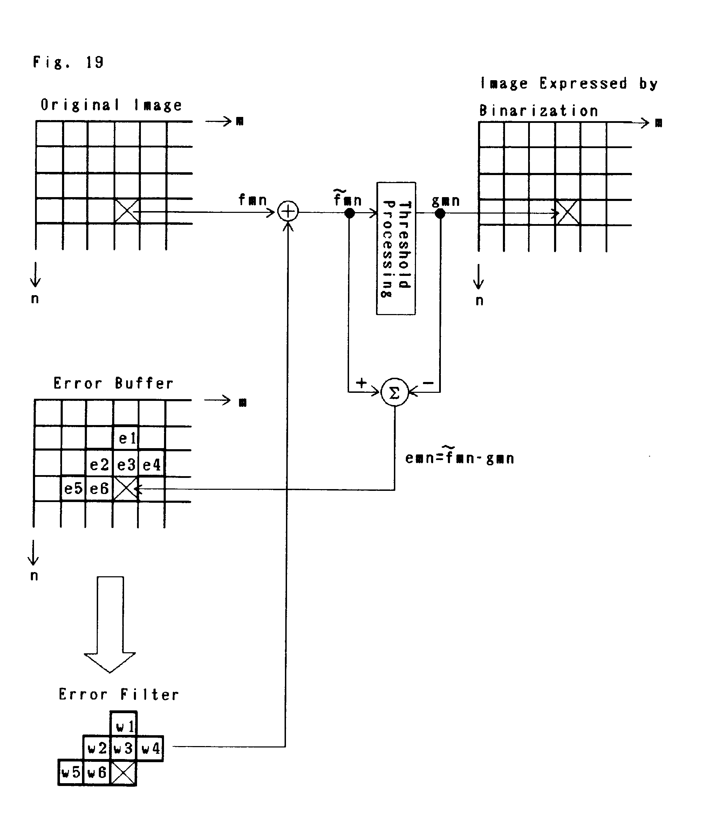

The principles of error diffusing method is shown in Fig. 19. Assuming the pixel value (e.g. brightness) on the coordinate (m, n) of an original image to be fmn, fmn is binarized considering the influence of the binary error of pixels in a predetermined neighborhood. For example, suppose that fmn is binarized by R/2 and the conversion below is performed, the binarized error indicated in formula (1) is generated with respect to the first pixel f00 on the coordinate (0, 0). 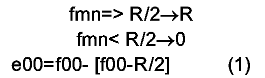 where, [ ] means gauss function.

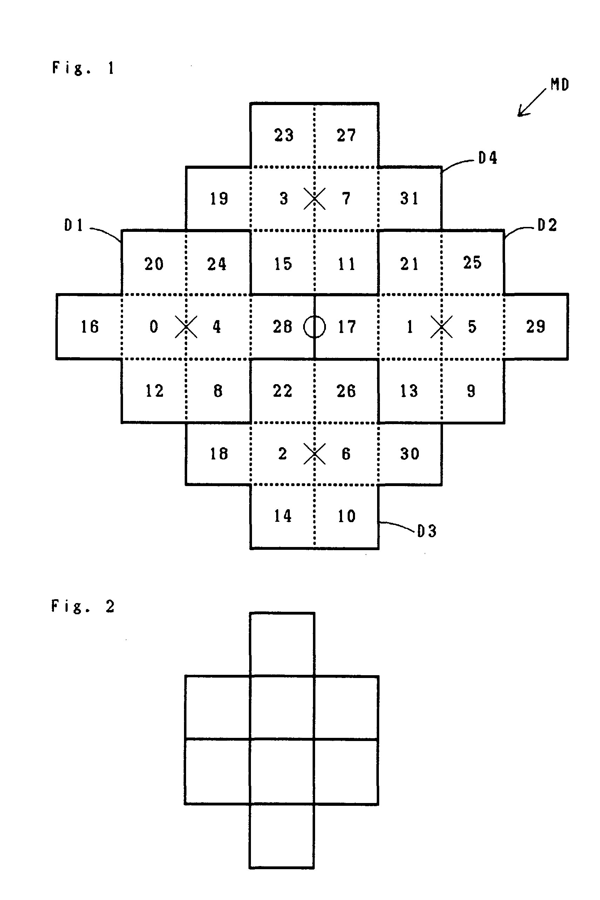

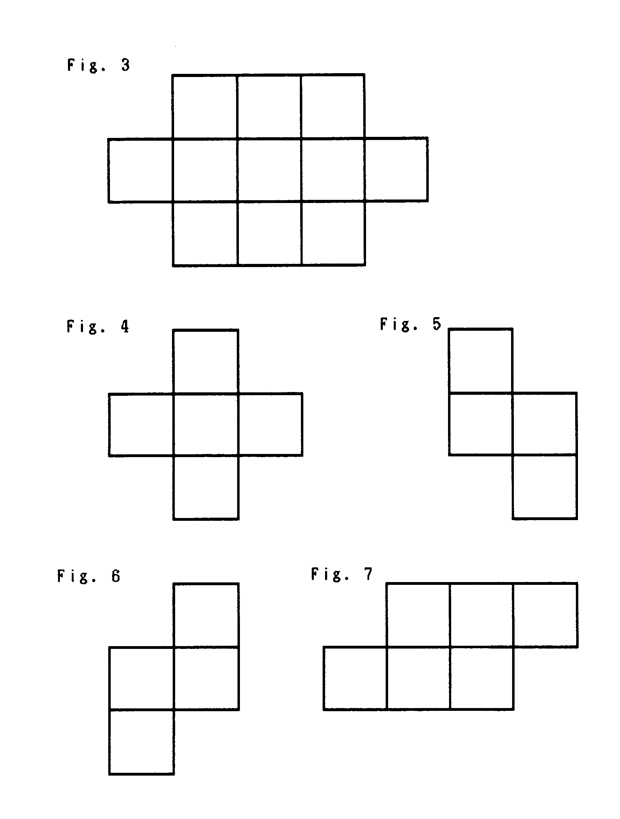

Concerning to a general pixel fmn, binarized error emn can be obtained as below. Defining a certain area (in Fig. 1, the area is comprised of 6 pixels including the pixel to be processed with the mark "X"), weights for each error in this area (in Fig. 19, from w1 to w6) are defined. The weight addition matrix for the peripheral pixel is called error filter. Binary error emn for a pixel fmn is obtained by formula (2). 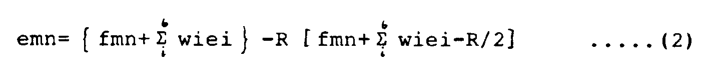 Here, f mn and gmn are defined as formula (3) and (4). 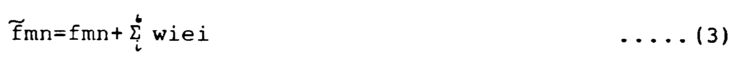 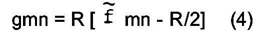 Therefore, formula (2) is equal to formula (5). 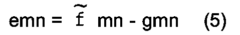 As shown in the formula above, binary error emn contains integrated binary error of pixels neighbor to the pixel to be processed. Difference between the brightness of whole of binarized image and whole of original image is minimized, as well as, density distribution of binarized image and of original image are substantially equal. Binary error of each pixel is stored in error buffer. The characteristics of binarized image in error diffusion method is decided by error filter, that is, there has been poor possibility that both of character area and configuration area are expressed adequately.

The improved error diffusion method is suggested. Namely, error filter is defined as forecast type so that stripes caused by error filter is removed and simultaneously the distribution steepness of dark spots is to be sharp. As long as referred toan image after the processing of the method, unnatural image emphasized outline is generated.

When light condition is not flat in a whole image, there is a case that the contrast of a part of image is extremely unclear by processing the whole image with a certain threshold. Shading is devised in order to overcome it and come to known. Shading is: dividing an image into some parts, the most appropriate threshold is calculated in each area by mode method. (A. Rosenfeld & AVINASH C. KAK, "Digital Picture Processing", 1976, Academic Press, Inc.)

Mode method is, however, the method for calculating an local minimal value of histogram of an image. It takes rather much time; consequently, the time for processing becomes vast when the number of areas in an image is many. It is not easy to reduce time for processing because executing mode method by hardware is difficult.

It is the object of the present invention to provide an improved image dither method which can be performed with high speed.

This object is solved by the subject-matter of claim 1.

According to the processing method with threshold for image of the present invention, it is easy to calculate threshold because threshold is settle based on each representative pixel value of dither image in an original image: it is possible to process in high speed by executing by hardware because dither processing can be performed by computation between images of dither cell and original image.
Fig. 1 shows a diagram of the first embodiment.
From Fig. 2 to Fig. 9 show a diagrams of various dither cells.
Fig. 10 shows a diagram of a macro dither cell using the dither cell in Fig. 3.
Fig. 11 shows a diagram of a macro dither cell using the dither cell in Fig. 4.
Fig. 12 shows a diagram to whose pixels given numbers.
Fig. 13 shows a diagram of the second embodiment whose macro dither cell is applied for images to be processed.

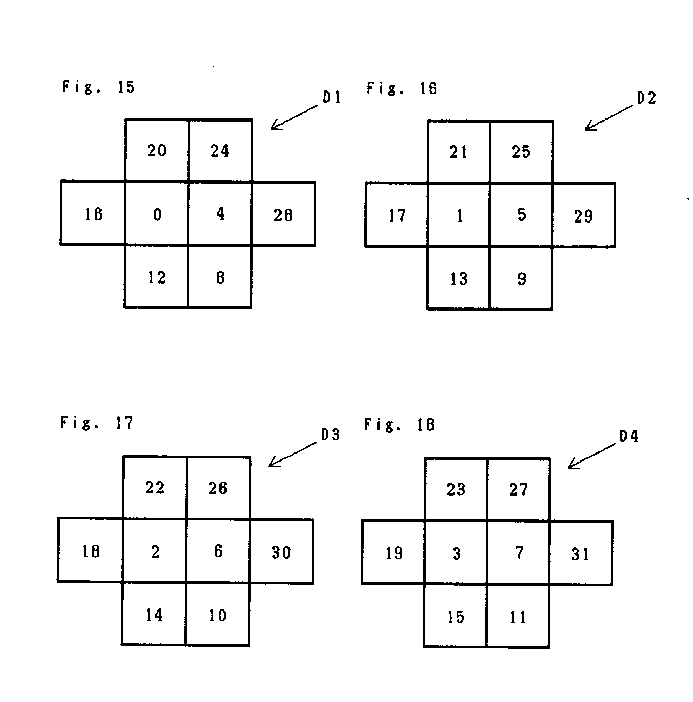

Fig. 14 shows a diagram of a comparison image of the second embodiment.
Fig. 19 shows a block diagram of principle of conventional error diffusion method.
Fig. 20 shows a block diagram of the third embodiment of the present invention.
Fig. 21 is a diagram showing the first characteristics of weight change in the third embodiment.
From Fig. 22 to Fig. 24 are diagrams showing the characteristics from the second to the fourth.
Fig. 25 shows a block diagram of the fourth embodiment.
Fig. 26 is a block diagram showing the image processing system to be applied to the fifth embodiment.
Fig. 27 is a block diagram showing an example of dither.
Fig. 28 is a diagram showing the relationship between the representative pixel value and threshold.
Fig. 29 is a block diagram showing an image processing system of the sixth embodiment.

Fig. 1 shows the first dither cells and macro dither cell: the whole figure shows a macro dither cell MD and what are rimmed with sold line are shown dither cells D1 to D4 in macro dither cell MD.

Dither cells for D1 to D4 are substantial regular hexagon with 8 pixels. 2 pixels are arranged in 3 rows lengthwise and one more pixel is added to both left and right sides of the center row of 2 pixels in lengthwise. The order of magnitude of threshold is defined for each dither cell according to following steps:
1) The left pixel of the two of center pixels in lengthwise,
2) The right pixel of the two of center pixels in lengthwise,
3) The right pixel of the two on the bottom line,
4) The left pixel of the two on the bottom line,
5) The left side pixel added to the center row pixels in lengthwise,
6) The left pixel of the two on the top line,
7) The right pixel of the two on the top line,
8) The right side pixel added to the center row pixels in lengthwise.

This is equivalent to that spiral type of patterns are given to each dither cell. The threshold magnitude order is given to the dither cells from D1 to D4 in this embodiment. Circulating dither cells from D1 to D4 and giving a pixel to each dither cell, the density is stood for in a unit of macro dither cell. Spiral pattern is not generated in dither image and natural impression is generated. The density of the image to be processed is evaluated in a unit of a macro dither cell, being possible to be stood for the density with 8x4=32 degrees. From inventor's experiment, density degrees more than 32 degrees are generally necessary to stand for natural image. Even if processing by 32 degrees of dither, a natural dither image is not generated by conventional dither.

Dither cells from D1 to D4 are arranged that the centroids (marked with "X" in Fig. 1) are to be top points of a rhombus. The centroids of each dither cell are arranged to. be extremely in short distance from the centroids of the macro dither cell (distance of 2 pixels) and consequently the pixels arranged circularly in dither cells from D1 to D4 give the impression that they are very dense.

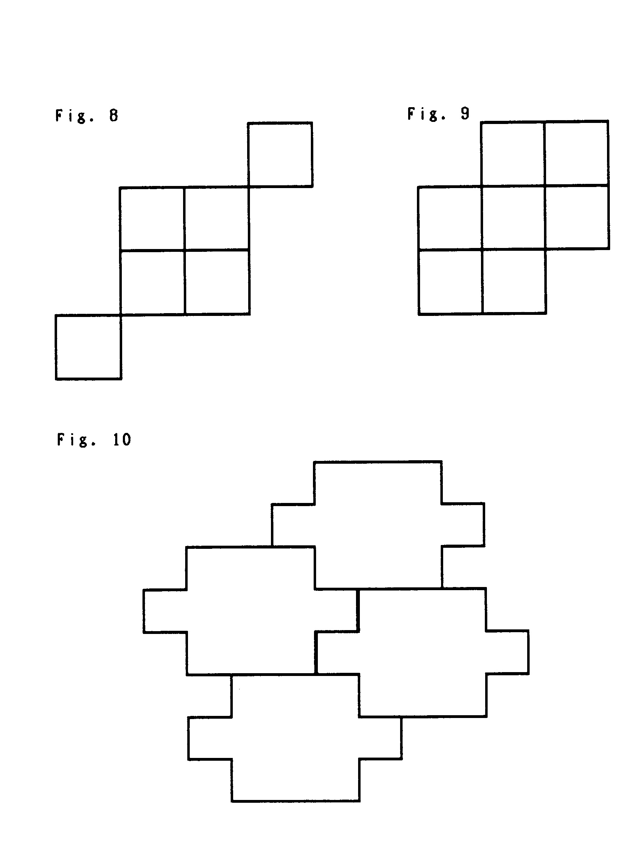

The shape of a dither cell has various patterns as sown from Fig. 2 to Fig. 9, which give natural impression that pixels in a non-rectangle dither cell dispersed.

Fig. 3 shows the dither cell of substantial square of 11 pixels. A macro dither cell including 4 of them is constructed as shown in Fig. 10, for example.

It is possible to stand for densities with 11x4=44 degrees by the macro dither cell in Fig. 10.

Fig. 4 shows a cross dither cell of 5 pixels. A macro dither cell including 4 of them is constructed as shown in Fig. 11, for example. It is possible to stand for densities with 5x4=20 degrees by the macro dither cell in Fig. 11. The dither image gives very dense as a whole.

The threshold pattern of each dither cell in a macro dither cell is settled beforehand in the above first embodiment and the varieties. When random liability is given to the threshold pattern of each dither cell, the dither image has more natural impression.

Generating a comparison image RIM of the same size of the image IM to be processed, whose each pixel is given the random numbers of r1, r2, .... When macro dither cell MD is applied in a certain area in the image IM to be processed, the random number of each pixel in the comparison image is compared at the same time. The values from 0 to 3 are given to the random numbers according to the dither cells from D1 to D4 in macro dithercell MD (in the figures from Fig. 15 to Fig. 18). When the random numbers are "0", "1", "2" and "3", dither cells D1, D2, D3 and D4 are indicated corresponding to "0" to "3", respectively.

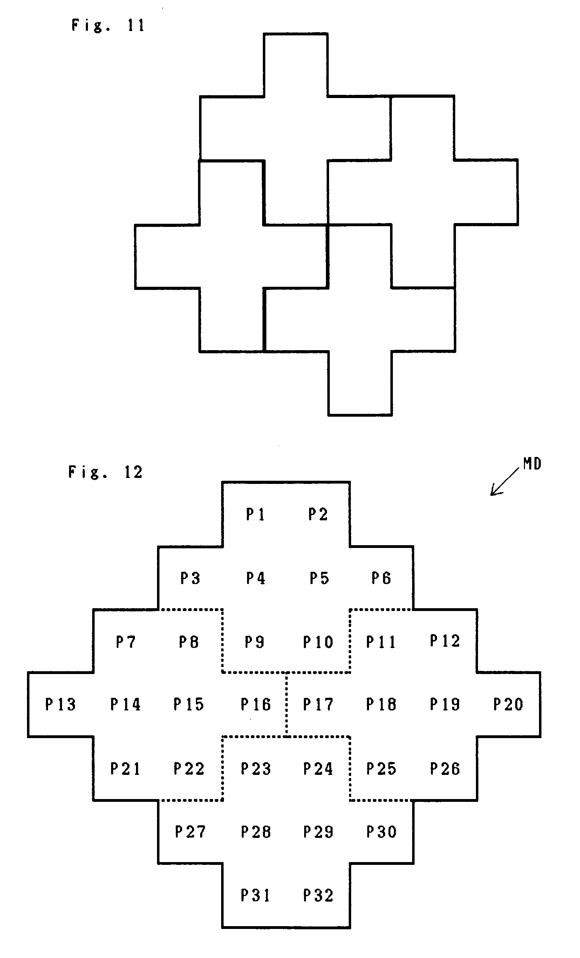

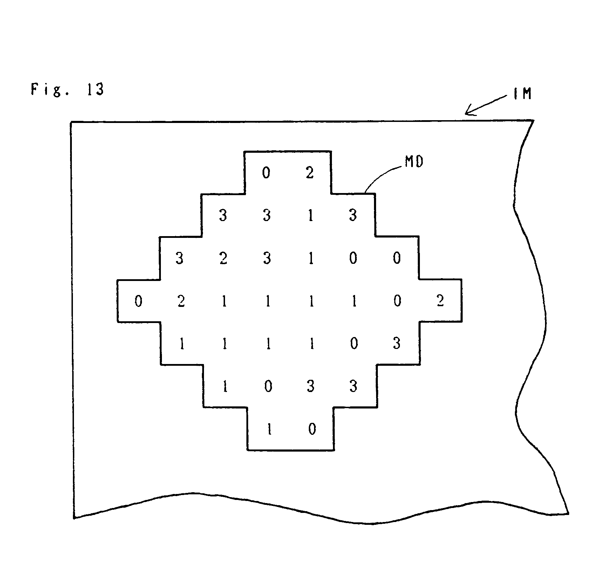

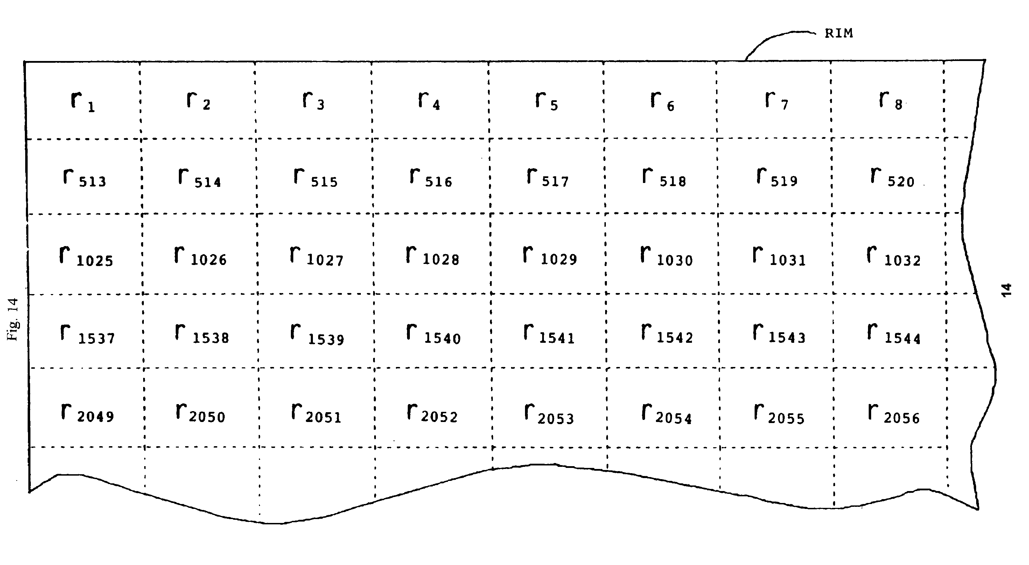

In Fig. 12, the pixels in macro dither cell MD are shown by the numbers from P1 to P32. In Fig. 13, an example of the random numbers corresponding to the pixels in the case that macro dither cell MD is applied to the image IM to be processed. For instance, as to the pixel P1 of the left pixel on the top row of macro dither cell MD, the random number is "0" according to the pixel in Fig. 13. The random number "0" corresponds to dither cell D1. Dither cell D1 is applied to the pixel P1. The place of the pixel P1 corresponds to the left one of the top line of the dither cell D1. The threshold of the pixel P1 is "20". Therefore, the pixel P1 is binarized by the threshold "20". In this way, the dispersion of pixels in a dither image becomes random by changing the applied dither cell into random and more natural impression can be generated.

It is of course possible to generate random numbers by using existing pseudo-random numbers sequence. More natural dither images can be obtained by quantizing a natural image of high random liability inputted from a camera into 0 to 3 and making it comparison image because pseudo-random numbers often have a certain cycle.

Though densities may incline on some state of the distribution of random numbers, such obstacle can be prevented completely by flattening the generation frequency of random numbers. For instance, in the comparison image RIM, the generation frequency of random numbers become flat by dispersing the random numbers so that the number of random numbers from 0 to 3 in every area corresponding to each macro dither cell is flat. When random numbers with the same distribution are applied to every macro dither cell in order to equalize appearance frequency of random numbers, the dither image has some cyclis features. Such cycle can be dissolved by changing the distribution of the random numbers according to the random numbers of every macro dither cell. It is not necessary to flatten the frequency of random number appearance in a unit of macro dither cell. It may be flattened in the unit of area including plural macro dither cells.

Therefore, it is possible to represent an image by dense dots in each part, increasing the number of degrees by a macro dither cell. That is, it is possible to represent an image with false gray level with good resolution.

More natural image with gray level can be realized by settling threshold order of dither cell in a macro dither cell according to the series of random number.

Hereinafter, a method for expressing binarization of image is described with referring to the attached drawings.

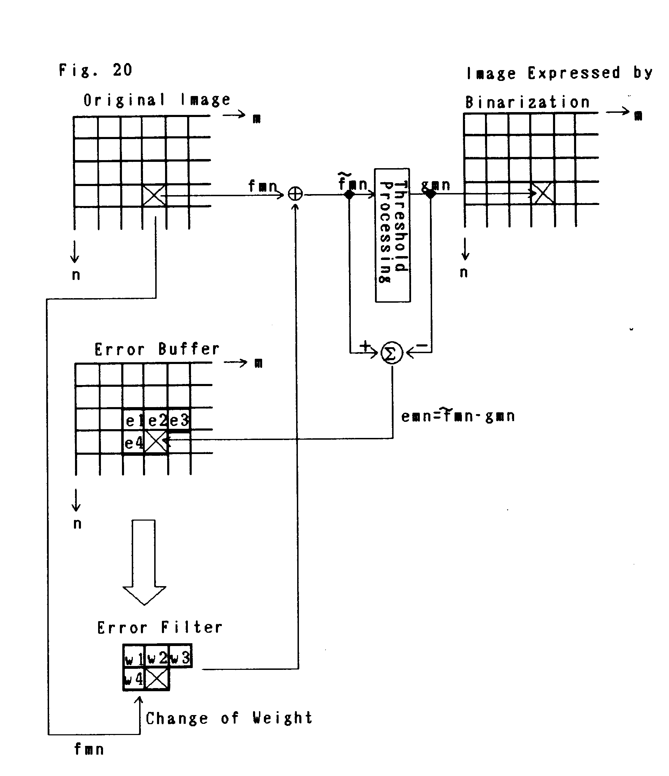

In Fig. 20, the error filter of the present embodiment comprises the pixel corresponding to the pixel to be processed, and the pixels before and after it on the previous scan line for the pixel to be processed and the previous pixel. In Fig. 20, binary error of these pixels are given from e1 to e4 along the direction of scan. Error filter gives the binary error of e1 to e4 and the weights of w1 to w4.

Weights w1 to w4 are not stable but changeable according to the value of the pixel to be processed. Therefore, when pixel value is fmn, weights w1 to w4 can be expressed by formula (6).
wi(fmn) (i is from 1 to 4) (6)

Using the method for expression of conventional error diffusing method, the present embodiment is expressed by formulae from (7) to (9). 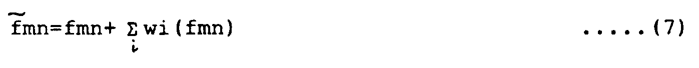 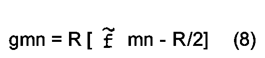 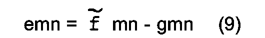 The expression in formula (7) can be applied for any error filter, without limitation of the value of i.

The consideration of the relationship between the weight wi(fmn) and binarized image is described below.

Assuming that wi(fmn)=0, the following two formulae are true. 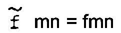 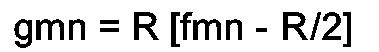 The above formulae are equivalent to binarization in narrow sense.

On the other hand, assuming that wi(fmn) » 0, binary error in a neighborhood strongly reflect to the pixel to be processed; that is, the pixel to be processed has the tendency to be black pixel when there are many white pixels around on binarized expression. In a local area, averaged density distribution is generated, similarly to smoothing. The processing is suitable for expressing an image of smooth gray-level.

From the statement above, it becomes clear that the characteristics of whole image can be reproduced with fidelity by lightening wi(fmn) in character area and adding weight to wi(fmn) in configuration area. As the weight is decided according to the pixel value of every pixel and it is changeable on every pixel, all area are connected smoothly.

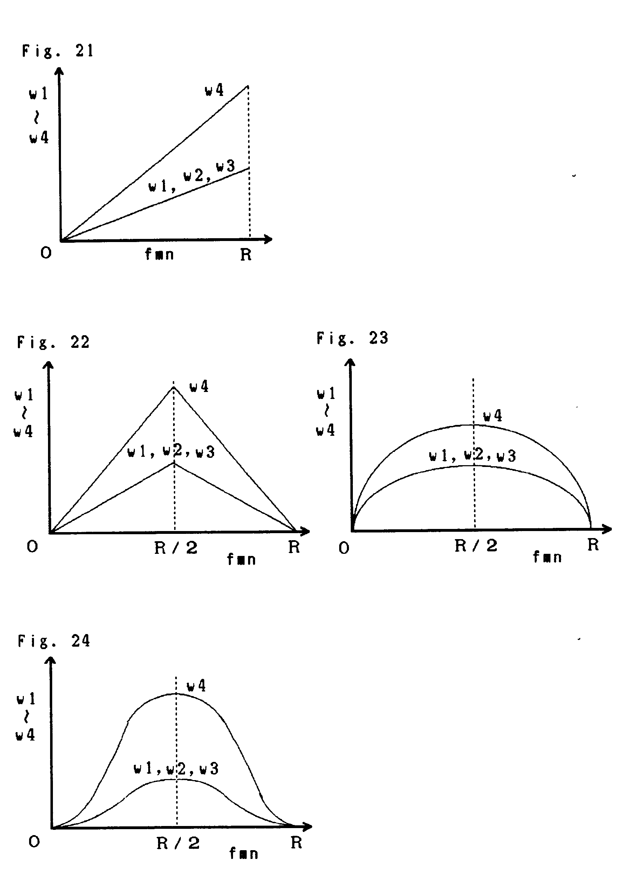

There may be many characteristics of wi(fmn). The characteristics of Fig. 21 to Fig. 24 give good results.

Fig. 21 shows that the tendency of monotonous increase ofw1 to w4 forfmn. The more pixel value become large, the more weight increase.

For instance, when such characteristics of weight is given to an image, including gray-level area with middle brightness and high brightness and also characters with low brightness (e.g. black), character area is binarized clearly and proper multi-level expression is executed in gray-level area.

In Fig. 22, w1 to w4 are given the characteristics of monotonous increase when fmn is less than or equal to the brightness R/2 and given the characteristics of monotonous decrease when fmn is more and or equal to the brightness R/2. When such characteristics is executed, clear binarization in narrow sense is performed in low brightness area and high brightness area, and multi-level expression is performed in gray-level area. Low brightness character and high brightness background (e.g. white) are performed clear binarization by the characteristics.

Conventionally monochromatic expression seldom executed in background area and dither pattern often exists scatteringly. In this case, not only the indication of character and configuration becomes unclear but also data quantity of background area extremely increase; consequently communication becomes inefficient on facsimile. Performing binarization in narrow sense or the processing like it, it becomes possible to indicate background area in monochrome.

In Fig. 23, w1 to w4 are given the characteristics of upward convexity added to that of Fig. 22, i.e. monotonous increase in left side and monotonous decrease in right side. Executing such characteristics, the area expressed in multi-level become wider and binarization in narrow sense is performed only in the area of extremely low brightness and in the area of extremely high brightness.

In Fig. 24, w1 to w4 are given the characteristics downward concavity on both sides and upward convexity in the middle added to that of Fig. 22, i.e. monotonous increase in left side and monotonous decrease in right side. Executing such characteristics like a bell, the area to be performed binarization in narrow sense becomes more clear and the grade of smoothing for the area to be performed multi-level expression becomes higher.

The error filter in Fig. 20 bear a good result under the condition below. 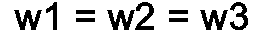 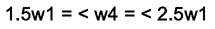 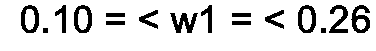 Generally, it is clear that middle value of above condition make a good result.

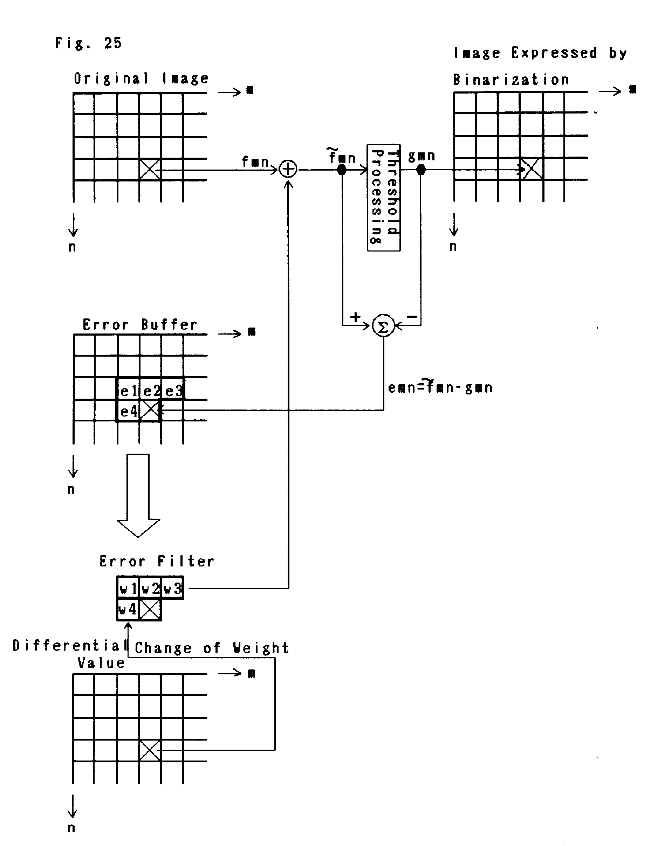

In Fig. 25 the weight of error filter is settled according to the differential value of an original image. Differential value tends to be remarkably big on the boundary of configuration area, and it tends to be big on the gray-level area in configuration are in comparison with character and background in character area. Therefore, weights are of course changeable based on differential value (the first degree differential, the second degree differential, Laplacian, Sobel operator and other differential operators).

Hereinafter, the processing method with threshold for image according to the present invention is described with referring to the attached drawings.

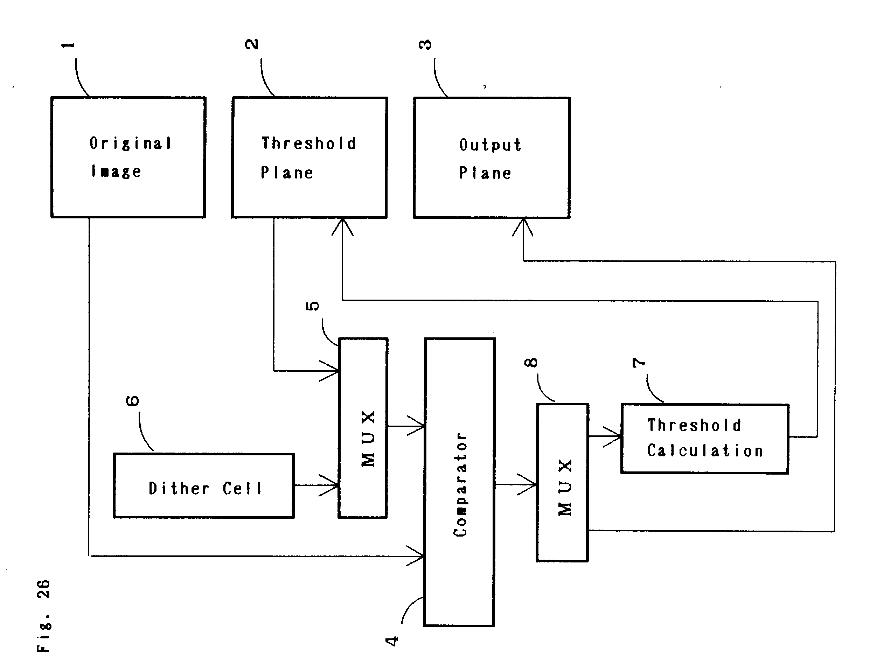

Fig. 26 shows an image processing system to be applied to the fifth embodiment, which comprises memory 1 holding the original image, memory 2 and memory 3 for threshold plane and output plane. Memory 1 is connected to comparator 4 and pixel data of the original image is compared with the output of multiplexer 5. Multi- plexer 5 is connected with register 6 for storing dither cell. Each pixel of the original image and dither cell are compared by the first scan, and dither image which is generated through comparison of dither with the original image is outputted from comparator 4.

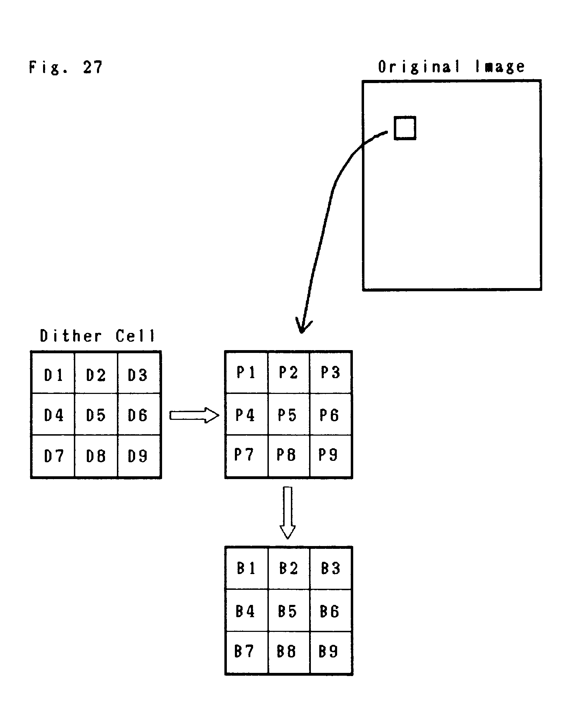

Any organized dither can be applied for dither method. For example, the processing in Fig. 27 is performed for Bayer pattern of 3x3. Assuming the density of each element of dithercell to be from D1 to D9, these densities are given the order in spiral. That is, the order is as follows.
D5=0
D8=1
D7=2
D4=3
D1=4
D2=5
D3=6
D6=7
D7=8 The dither cell is applied to the area corresponding to each dither cell.

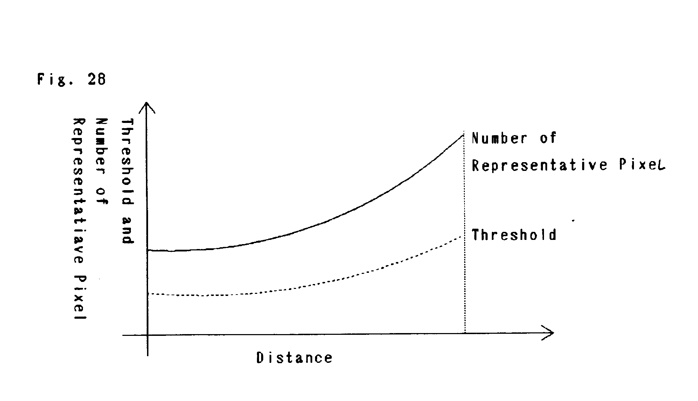

When the density of each pixel in the area corresponding to a dither cell is from P1 to P9, Bi of each pixel's density after performing dither is calculated as below. 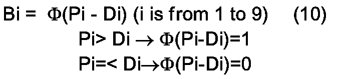 When P1 to P9 are constant density, the number of black pixels and white pixels in the area corresponding to dither cell in dither image represent the density and brightness in the area, respectively. The general term of such density and brightness is representative pixel value. Representative pixel value represents the mean density or mean brightness in the area corresponding to each dither cell. Suppose that the mean density or mean brightness reflects the condition for proving the area, the image equivalent to the one, whose light condition of whole image is corrected to be flat and binarized, can be obtained when approximate middle value of representative pixel value is the threshold. 1st dimensional area of it is shown in Fig. 28.

As to an image processing system in Fig. 26, an output of comparator4 is inputted to threshold calculation portion 7, in which the value of representative pixel in the area corresponding to each dither cell is calculated and its approximate middle value is outputted as threshold. The threshold is registered in threshold plane 2 as the threshold corresponding to all the pixels in each dither cell area (3x3, in Fig. 27). The processing above is executed in 1st scan (from 1/30 sec. to 1/60 sec., usually).

In the second scan, original image and threshold is read out by 1 pixel from memory 1 and memory 2, respectively, and they are compared in comparator 4. Through the processing, binarization with the suitable threshold, that is the threshold processing including shading, is performed.

The image after threshold processing is written and registered in output plane 3. The output of comparator is selectively inputted to threshold calculation portion 7 or output plane 3, selected by multi-plexer 8.

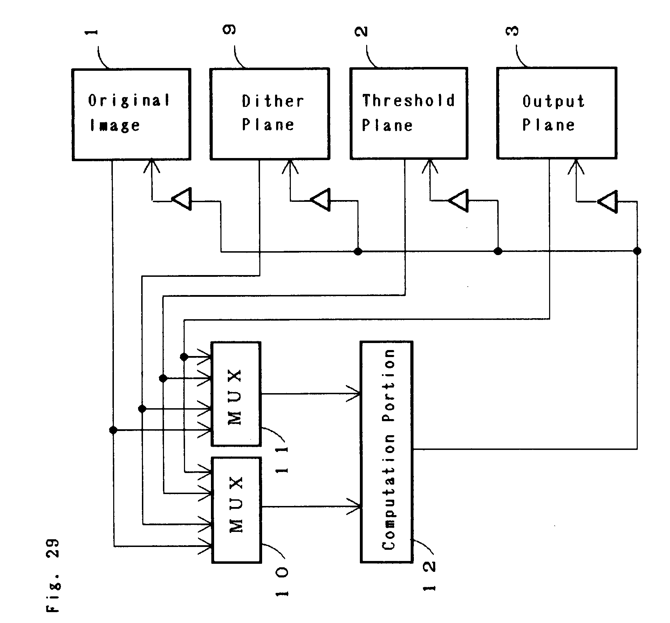

Fig. 29 shows an alternative embodiment of the present invention. It performs the same processing as in Fig. 26 by an image processing system of wider usage.

The image processing system in Fig. 29 comprises memory 9 for storing dither cell in addition to memories from 1 to 3 for original image, threshold plane and output plane. Memory 9 is used as the dither plane to hold dither cell for a whole image.

All of the outputs of memories from 1 to 3 and 9 are inputted to a pair of multi-plexers 10 and 11, whose outputs are inputted to computation portion 12.

Computation portion 12 calculates the representative pixel value in dither processing and the result of dither processing in formula (10). Calculated threshold is stored in threshold plane 2. Threshold plane 2 or original image 1 is selected in multi-plexer 10 and 11: threshold processing is performed to original image by the computation between both images. The result of the threshold processing is stored in output plane 3.

In this way, image memory can be applied for another use and consequently, its usage becomes wider by adopting the structure to store dither cell in image memory.

It is possible to apply the image processing system in Fig. 29 to general image processing by adopting computation portion 12 to perform one of or both of computation between images and convolution processing.

## Claims

1. A dither processing method comprising the steps of:
binarizing within a first scan an original image by use of a dither cell to generate a dither image;
calculating for each area of the dither image which corresponds to the size of the dither cell a representative density,
calculating from the representative densities a median value of the dither image; and
binarizing in a second scan the original image by use of a threshold value corresponding to said calculated median value.

## Patentansprüche

1. Dither (Misch)-Verarbeitungsverfahren mit folgenden Schritten:
Digitalisieren eines Ursprungsbildes in einer ersten Abtastung unter Verwendung einer Dither-Zelle, um ein Dither (Misch)-Bild zu erzeugen;
Berechnen für jeden Bereich des Dither-Bildes, der mit der Größe der Dither-Zelle übereistimmt, eine repräsentative Dichte;
Berechnen eines Mittelwertes für das Dither-Bild aus den repräsentativen Dichten; und
Digitalisieren des Ursprungsbildes in einer zweiten Abtastung durch Verwendung eines Schwellwertes, der dem berechneten Mittelwert entspricht.

## Revendications

1. Méthode de traitement par tremblement, comprenant les étapes de :
- numérisation en binaire, dans un premier balayage, d'une image originale en utilisant une cellule de tremblement pour engendrer une image de tremblement;
- calcul, pour chaque zone de l'image de tremblement qui correspond à la taille de la cellule de tremblement, d'une densité représentative;
- calcul, à partir des densités représentatives, d'une valeur moyenne de l'image de tremblement; et
- numérisation en binaire, dans un second balayage, de l'image originale en utilisant une valeur de seuil correspondant à ladite valeur moyenne calculée.
